# EUROPÄISCHE PATENTSCHRIFT

(11) **EP 2 137 503 B1**
(45) Veröffentlichungstag und Bekanntmachung des Hinweises auf die Patenterteilung: **19.06.2013**
(21) Anmeldenummer: 08735239.9
(22) Anmeldetag: 09.04.2008
(51) Int. Cl.: B66C 13/08, B66C 13/16, G01G 23/37, G01G 19/14

(54) **VERFAHREN ZUR BESTIMMUNG VON MASSENSCHWERPUNKTEN BEI GROSSSTRUKTUREN**
METHOD FOR DETERMINING CENTERS OF MASS FOR LARGE STRUCTURES
PROCÉDÉ DE DÉTERMINATION DE CENTRES DE GRAVITÉ DE MASSE DE STRUCTURES DE GRANDE TAILLE

(30) Priorität: 10.04.2007 DE 102007017462
(43) Veröffentlichungstag der Anmeldung: 30.12.2009
(73) Patentinhaber: Fraunhofer-Gesellschaft zur Förderung der angewandten Forschung e.V., 80686 München (DE); Universität Rostock, 18055 Rostock (DE)
(72) Erfinder: WURST, Oliver, 18059 Rostock (DE); WANNER, Martin-Christoph, 18211 Nienhagen (DE); SCHUBERT, Birger, 18211 Bargeshagen (DE)
(74) Vertreter: Pfenning, Meinig & Partner GbR
(86) Internationale Anmeldenummer: PCT/EP2008/002967
(87) Internationale Veröffentlichungsnummer: WO 2008/122448

(56) Entgegenhaltungen:
- EP-A- 0 892 256
- WO-A-94/09347
- DE-A1- 3 629 244
- DE-U1- 29 622 132
- GB-A- 2 414 562

## Beschreibung

Die Erfindung betrifft ein Verfahren zur Bestimmung eines räumlichen Massenschwerpunkts oder Schwerpunkts und einer Masse oder eines Gewichts eines Objekts mittels einer Hebevorrichtung. In der Regel sind Masse und Gewicht zueinander proportional, wodurch der Massenschwerpunkt und der Schwerpunkt gleichgesetzt werden können.

Für Objekte kleiner Größe und geringen Gewichts sind spezielle Vorrichtungen zur Bestimmung des räumlichen Massenschwerpunkts verfügbar. Diese finden unter anderem im Flugzeug- sowie Automobilbau Anwendung. Allerdings handelt es sich hierbei um Wägeplattformen mit Hebevorrichtungen, die in der Regel speziell für das jeweils zu messende Bauteil angefertigt werden. Zudem sind alle verfügbaren Wägesysteme dieser Art nur für Objekte kleiner bis mittlerer Größe und Gewicht bekannt.

Besonders in Industriezweigen, die sich mit der Fertigung von Großstrukturen befassen, wie Stahl- und Schiffbauunternehmen, ist die experimentelle Bestimmung des Gewichts und besonders des räumlichen Massenschwerpunkts der zu fertigenden Baugruppen bisher kaum möglich. In speziellen Bereichen, wie dem Bau von Militär- oder Off-Shore-Objekten, in denen das Gewicht und die Gewichtsverteilung eine entscheidende Rolle für die charakteristischen Objekteigenschaften darstellt, wird ein aufwendiges Gewichts- und Massenschwerpunktmanagement durchgeführt. Informationen über die Einzelgewichte und deren Gewichtsverteilung werden theoretisch anhand von Materialdaten und Abmessungen bestimmt, aus Zulieferangaben entnommen oder messtechnisch ermittelt. Problematisch ist hierbei die Vollständigkeit und Verlässlichkeit der zugearbeiteten Daten sowie die Problematik der Quantifizierung sämtlicher Materialien und Einbauten wie z.B. Schweißnähte, Isolierungen, Konservierungen, Materialtoleranzen und ähnliches.

In der Druckschrift WO 92/22458 A1 wird ein Verfahren zur Bestimmung eines räumlichen Massenschwerpunkts und einer Masse eines Objekts mittels einer Hebevorrichtung offenbart. Dabei wird das Objekt mittels einer Vielzahl von Seilwinden in Position gebracht. Einmal in Position gebracht, können sowohl die Gesamtmasse als auch anhand der Abstände der Seilwinden der Massenschwerpunkt ermittelt werden. Nachteil eines derartigen Verfahrens ist es, dass die Hebeeinrichtung stark spezifisch ausgelegt ist und die Berechnung des Massenschwerpunktes nur unzureichend erfolgen kann.

Ähnlich in dem in der Druckschrift WO 92/22458 offenbarten Stand der Technik kann zur Bestimmung der Masse eines großen Objekts dieses auf Pallungen angeordnet werden, wie sie üblicherweise zur Ablage von Baugruppen und Sektionen eingesetzt werden. Durch Integration von handelsüblichen Kraftsensoren kann die Gewichtsbestimmung des Objekts ohne nennenswerten Aufwand in einen betrieblichen Ablauf eingebunden werden. Mit demselben System kann der Massenschwerpunkt einer stahlbaulichen Großstruktur zumindest in zwei Dimensionen bestimmt werden. Des Weiteren existieren einfache kranbasierte Verfahren, sowie Stationärwaagen, welche den Anforderungen bei Großstrukturen jedoch nicht immer standhalten, und bei denen der Massenschwerpunkt ebenfalls nur in zwei Dimensionen bestimmt werden kann.

DE 36 29 244 A1 offenbart ein bekanntes Verfahren und eine Vorrichtung zur Bestimmung des Gewichtes und/oder der räumlichen Schwerpunktlage von Container.

Die Aufgabe des vorliegenden Verfahrens besteht darin, mittels industrieller Krananlagen bzw. Hebevorrichtungen den räumlichen Massenschwerpunkt.und das Gewicht von Körpern beliebiger Größe zu bestimmen. Das zulässige Gewicht des zu analysierenden Körpers und dessen maximale Ausmaße sollten dabei lediglich durch die Kapazität der zur Verfügung stehenden Hebevorrichtung beschränkt werden. Das Verfahren sollte industrietauglich, erweiterbar, und benutzerfreundlich sein sowie weitgehend automatisch arbeiten.

Die Aufgabe wird mit dem Verfahren des Hauptanspruchs 1 und einer Hebevorrichtung des Anspruchs 11 gelöst.

Das erfindungsgemäße Verfahren erlaubt die Bestimmung des räumlichen Massenschwerpunkts und der Masse eines

Objekts mittels einer Hebevorrichtung, wobei die Hebevorrichtung mindestens zwei, vorzugsweise drei oder mehr, unterschiedliche Aufhängevorrichtungen aufweist, wobei eine Aufhängevorrichtung jeweils einen Aufhängungspunkt und ein Seilelement aufweist. In einem ersten Schritt wird das Objekt an mindestens zwei unterschiedlichen Objektpunkten aufgehängt, wobei die Objektpunkte jeweils mit einer Aufhängevorrichtung der Hebevorrichtung verbunden werden. Im aufgehängten Zustand werden mindestens zwei unterschiedliche räumliche Lagen des Objekts im Raum gemessen. In jeder räumlichen Lage des Objekts wird sowohl die Orientierung des Objekts in der räumlichen Lage als auch die auf die Aufhängungspunkte wirkenden Kräfte des aufgehängten Objekts gemessen. Für jede räumliche Lage erhält man einen Flächenschwerpunkt des Objekts, d.h. der Massenschwerpunkt wird in zwei Koordinaten bestimmt. Dadurch besitzt der Flächenschwerpunkt gegenüber dem Massenschwerpunkt noch eine unbestimmte Koordinate; der Flächenschwerpunkt ist damit eigentlich eine Gerade im mitbewegten objekteigenen Koordinatensystem, die zum Zeitpunkt der Messung erdlotrecht ausgerichtet ist und die oft als Kraftwirkungslinie bezeichnet wird. Unterschiedliche räumliche Lagen im Sinne der Erfindung unterscheiden sich dadurch, dass sie weder durch eine Drehung um eine Vertikalachse, durch eine translatorische Bewegung noch durch eine Kombination von beidem ineinander übergeführt werden können. Mit Hilfe von mindestens zwei Flächenschwerpunkten kann der räumliche Massenschwerpunkt durch die Überlagerung der Kraftwirkungslinien, welche durch den Massenschwerpunkt laufen und senkrecht auf den objekteigenen Flächen der Flächenschwerpunkte stehen, ermittelt werden.

Das Verfahren hat den Vorteil, dass aufgrund des Vorhandenseins von mindestens zwei Aufhängevorrichtungen die räumliche Lage des zu messenden Objekts durch eine Veränderung der Seillängen zueinander erreicht werden kann. Von daher muss das Objekt nicht abgelassen werden und an neuen Aufhängungspunkten aufgehängt werden, um die unterschiedlichen räumlichen Lagen zu bestimmen. Dies ermöglicht die Bestimmung des räumlichen Massenschwerpunkts in sehr kurzer Zeit. Das zulässige Gewicht des zu analysierenden Objekts und dessen maximale Ausmaße werden dabei lediglich durch die Kapazität der zur Verfügung stehenden Hebevorrichtung, wie z.B. einer Krananlage, welche aus einem oder mehreren Kränen besteht, beschränkt. Des Weiteren kann das Verfahren mit Hilfe bereits vorhandener Krananlagen durchgeführt werden, da nur die auf die Aufhängevorrichtungen wirkenden Kräfte bestimmt werden müssen.

Das Verfahren zur Bestimmung der Flächenschwerpunkte und letztendlich des Massenschwerpunkts beruht darauf, dass unter Kenntnis der auf die Aufhängungspunkte wirkenden Kräfte das Momentengleichgewicht bzgl. des Massenschwerpunkts - und somit die Lage des Massenschwerpunkts - mit Hilfe einfacher mechanischer Gleichungen bestimmt werden können.

Insbesondere bei sehr großen oder sehr schweren Objekten sollten mindestens drei Aufhängevorrichtungen vorhanden sein.

Vorteilhafte Weiterbildungen des erfindungsgemäßen Verfahrens sind in den untergeordneten Ansprüchen beschrieben.

Vorteilhafterweise ist bei der Verwendung des Verfahrens eine Datenauswerteeinheit vorhanden. In der Datenauswerteeinheit werden die Messungen der auf die Seilelemente bzw. Aufhängungspunkte wirkenden Kräfte gespeichert und/oder verarbeitet. Auf diese Art und Weise können die Flächenschwerpunkte und letztendlich der Massenschwerpunkt im praktischen Alltag schnell und unkompliziert ermittelt werden. Mit Hilfe einer Datenauswerteeinheit ist es möglich, eine stetige Messung der aufgrund unterschiedlicher räumlicher Lagen wechselnden Flächenschwerpunkte durchzuführen, was eine besonders schnelle und zuverlässige Bestimmung des Massenchwerpunkts erlaubt.

Vorteilhafterweise werden die Messergebnisse bezüglich der auf die Aufhängungspunkte wirkenden Kräfte und die Messung der Orientierung des zu messenden Objekts kabellos, insbesondere per Funk, an die Datenauswerteeinheit übermittelt. Da das beschriebene Verfahren insbesondere zur Bestimmung des Massenschwerpunkts von Großstrukturen konzipiert ist, bietet sich aufgrund der räumlichen Abmessungen der Großstrukturen an, dass die Messungen nicht per Hand abgelesen werden müssen, sondern per Funk in der Datenauswerteeinheit zusammengeführt werden. Mit Hilfe der Datenauswerteeinheit kann die Auswertung der Messergebnisse automatisch erfolgen, was zu einer großen Akzeptanz und Benutzerfreundlichkeit führt. Dabei können auch mehr als zwei räumliche Lagen gemessen werden, was zu einer Überbestimmung des Massenschwerpunkts führt, da es sich um ein überbestimmtes Gleichungssystem handelt. In der Regel können bei derartigen Systemen nur Näherungslösungen ermittelt werden. Aufgrund der Vielzahl von Messwerten, die im Rahmen der Messungen erfasst werden können, kann eine stochastische Auswertung erfolgen, die als Maßstab für die Sicherheit des Messergebnisses herangezogen werden kann.

Zweckmäßig ist es, wenn die Aufhängevorrichtungen getrennt ansteuerbar sind und die Seilelementlänge veränderbar ist. Dies bietet eine große Zeitersparnis bei der Bestimmung des Massenschwerpunktes. Insbesondere können durch veränderbare Seilelementlängen, die unterschiedlichen räumlichen Orientierungen des Objekts durch eine Veränderung des Verhältnisses der Seilelementlängen zueinander realisiert werden und die Orientierung des Objekts davon ausgehend bestimmt werden. Zweckmäßig ist auch das Anbringen von mindestens einem am Objekt befestigen Neigungssensor, welcher die Orientierung des Objekts im Verhältnis zum Raum (oder eines anderen festen Referenzkoordinatensystems) über Bestimmung der Winkel zu den festen Raumachsen bestimmt. Der Vorteil besteht darin, dass die Messung insbesondere bei Vorhandensein mehrerer Neigungssensoren zuverlässig und schnell vorgenommen werden kann, und insbesondere gut mit der automatischen Auswertbarkeit mit Hilfe der Datenauswerteeinheit kombinierbar ist.

Vorteilhafterweise wird das Objekt derart an den Aufhängevorrichtungen aufgehängt, dass die Seilelemente eine Schrägstellung von weniger 10°, vorzugsweise weniger als 5°, zum senkrechten Lot aufweisen. Der Vorteil besteht darin, dass aufgrund des geringen Schrägzugs die auf die Seile wirkenden Kräfte nahezu vollständig die Gewichtskraft des zu messenden Objektes beschreiben. Je kleiner die Schrägstellung des Seiles ist, umso genauer ist die Messung und Bestimmung der Gewichtskraft ohne zusätzliche Information bzgl. der Neigung der Aufhängevorrichtungen, und dementsprechend ist eine genauere Bestimmung des Massenschwerpunkts möglich. Für den Fall, dass eine Schrägstellung der Seilelemente nicht vermeidbar ist, können erfindungsgemäße Weiterbildungen der Erfindung zur Kompensation eingesetzt werden.

In einer vorteilhaften Weiterbildung des Verfahrens werden die auf die Aufhängevorrichtungen wirkenden Kräfte des Objekts durch Sensoren bestimmt. Insbesondere können hierbei Lastschäkel verwendet werden, welche über integrierte Sensoren verfügen. Der Vorteil besteht darin, dass eine automatische Auswertbarkeit insbesondere bei Übertragung der Messergebnisse per Funk schnell und zuverlässig eingebunden werden kann.

Um den Massenschwerpunkt zu berechnen, können die auf die Seile wirkenden Kräfte auf verschiedene Art und Weise zur Berechnung der Gewichtskraft und des Massenschwerpunkts herangezogen werden. In einer ersten vorteilhaften Weiterbildung des Verfahrens werden die auf die Seile wirkenden Kräfte jeweils in eine vertikale und eine horizontale Kraftkomponente zerlegt. Der Vorteil besteht darin, dass durch die Bestimmung der vertikalen Kraftkomponente auf die einzelnen Aufhängungspunkte die Gewichtskraft des Objekts sehr genau bestimmt werden kann und sich die Berechnung der durch die Aufhängungspunkte bedingten Momente und damit der Flächenschwerpunkte und des Massenschwerpunkts in ihrer Genauigkeit verbessern.

Eine weitere vorteilhafte Weiterbildung besteht darin, dass die auf die Aufhängungspunkte wirkenden Kräfte jeweils in drei unabhängige Kraftkomponenten zerlegt werden. Hierbei bieten sich die kartesischen Raumkoordinaten an, bei welchen vorzugsweise eine Achse erdlotrecht ausgerichtet ist. Durch das Messen von drei verschiedenen Kraftkomponenten kann eine besonders genaue Bestimmung des Massenschwerpunkts vorgenommen werden.

Hierbei ist es vorteilhaft, wenn die Verbindung zwischen dem Objekt und den Aufhängevorrichtungen über eine kardanische Aufhängung geschieht. Durch die kardanische Aufhängung kann die Stellung bzw. Richtung der Aufhängevorrichtung im Raum zuverlässig bestimmt werden.

Zweckmäßig ist es, dass bei der Messung des Gewichts des Objekts das Eigengewicht von Teilen der verwendeten Hebevorrichtung bekannt ist. Da insbesondere die abwärts eines Kraftsensors angehängten Gewichte der Hebevorrichtung die Kraftmessungen verfälschen können, bietet es sich an, im Rahmen, beispielsweise einer Taramessung, die auf die Kraftsensoren wirkenden Kräfte, ohne ein angehängtes Objekt zu messen. Dadurch lässt sich eine Verbesserung des Messergebnisses und der Massenschwerpunktsbestimmung erzielen.

Eine erfindungsgemäße Hebevorrichtung weist mindestens zwei, vorzugsweise drei, unterschiedliche Aufhängevorrichtungen, welche jeweils über ein Seilelement und einen Aufhängungspunkt verfügen, auf. Die Zahl der Aufhängevorrichtungen richtet sich nach dem Gewicht und den Abmessungen des zu messenden Objekts, so dass bei sehr großen Objekten eine größere Anzahl von Aufhängevorrichtungen von Nöten sein kann. Die Aufhängevorrichtungen sind jeweils getrennt ansteuerbar und frei hängend und weisen Sensoren auf, mit welchen eine Orientierung eines aufgehängten Objekts im Raum, wie beispielsweise das Verhältnis der frei hängenden Länge der Seilelemente zueinander, bestimmbar ist. Des Weiteren ist eine Datenauswerteeinheit vorhanden, welche mit den Sensoren verbunden ist.

Vorteilhafterweise sind Sensoren zur Bestimmung der Seilneigung und/oder der auf die Seilelemente wirkenden Kräfte vorhanden. Auch diese sind vorteilhafterweise mit der Datenauswerteeinheit verbunden.

Zweckmäßig ist es auch, dass die Datenauswerteeinheit mit mindestens einem weiteren Neigungssensor verbunden ist, wobei der Neigungssensor an einem an der Hebevorrichtung aufgehängten Objekt befestigt ist. Dadurch kann die Datenauswerteeinheit das Koordinatensystem eines Objektes über eine Transformation in Verhältnis zu einem raumbezogenen Koordinatensystem setzen.

Vorteilhafterweise kommunizieren die verwendeten Sensoren mit der Datenauswerteeinheit per Funk.

Bislang wurde nur die Möglichkeit diskutiert das Objekt an mindestens zwei Aufhängevorrichtungen aufzuhängen und anschließend den Massenschwerpunkt zu bestimmen. Alternativ hierzu kann das Objekt auch auf mindestens zwei, vorzugsweise drei oder mehr, Tragevorrichtungen mit jeweils einem Auflagepunkt angeordnet aufgelegt werden. Durch eine Veränderung der Positionierung der Tragevorrichtungen, insbesondere eine Änderung der effektiven Höhe der Tragevorrichtung über dem Erdboden wird das Objekt in unterschiedliche räumliche Lagen gebracht, wobei die auf die Tragevorrichtungen wirkenden Kräfte gemessen werden und aus den Messungen die Flächenschwerpunkte und der räumliche Massenschwerpunkt ermittelt werden. Einziger Unterschied zu den vorab erläuterten Verfahren ist, dass das Objekt nicht an den Aufhängevorrichtungen aufgehängt ist, sondern durch die Tragevorrichtungen, wie beispielsweise Pallungen, getragen wird. Durch eine Höhenverstellbarkeit der Tragevorrichtungen können die unterschiedlichen räumlichen Lagen analog zur Ausführungsform des Verfahrens bei welchem die unterschiedlichen Verhältnisse der Seillängen zueinander verändert werden herbeigeführt werden. Lediglich die Verfahrensvarianten, welche besondere Ausführungen von Lastschäkeln verlangen, finden keine direkte Anwendung.

Zur Durchführung des Verfahrens wird eine Hebevorrichtung verwendet, welche mindestens zwei, vorzugsweise drei oder mehr, höhenverstellbare Tragevorrichtungen mit jeweils mindestens einem Auflagepunkt aufweist und analog zur Hebevorrichtung mit Aufhängepunkten über eine Datenauswerteeinheit verfügt. Die Datenauswerteeinheit ist dabei mit Sensoren verbunden, welche eine räumliche Lage und/oder Orientierung eines aufgelegten Objekts bestimmen.

Im Folgenden soll anhand eines Beispiels das erfindungsgemäße Verfahren näher erläutert werden. Es zeigen:
- Fig. 1: Hebevorrichtung mit zu messendem Objekt;
- Fig. 2a und 2b: erste und zweite räumliche Lage des zu messenden Objekts;
- Fig. 3: Schnittpunkt der Schwerelinien im objekteigenen Koordinatensystem in einer zweidimensionalen Darstellung;
- Fig. 4: Schrägzugkompensation des erfindungsgemäßen Verfahrens;
- Fig. 5: Hebevorrichtung mit Datenauswerteeinheit;
- Fig. 6: Alternative Ausführungsform einer Hebevorrichtung.

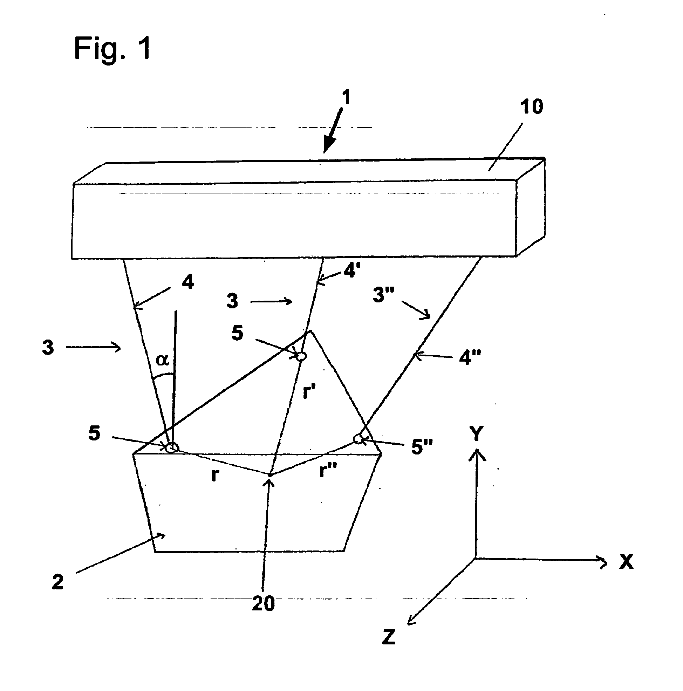

Figur 1 zeigt eine Hebevorrichtung 1 und ein daran befestigtes Objekt 2, dessen Massenschwerpunkt 20 zu bestimmen ist. Die Hebevorrichtung 1 weist drei Aufhängevorrichtungen 3, 3', 3" auf, wobei die Aufhängevorrichtungen jeweils ein Seilelement 4, 4', 4'' und einen Aufhängungspunkt 5, 5', 5'' aufweisen. In diesem Fall sind die Seilelemente 4, 4', 4'' aus Stahlseilen, welche jeweils über Winden, welche hier nicht eingezeichnet sind, in Ihrer Länge veränderbar sind und die getrennt angesteuert werden können.

Das Objekt 2 wird an drei unterschiedlichen Orten mit den Aufhängungspunkten 5, 5', 5'' verbunden. Durch ein Spannen der Seilelemente 4, 4', 4'' wird das Objekt angehoben und befindet sich in Ruhe, wenn die physikalischen Momente bzgl. des Massenschwerpunkts des Objekts sich zu Null addieren und die dabei wirkenden Kräfte in den Aufhängungspunkten die Gewichtskraft des Objekts kompensieren. Die Momente werden dabei über die Kräfte, welche an den Aufhängungspunkten 5, 5' und 5'' wirken unter Entfernung der Aufhängungspunkte vom Massenschwerpunkt gebildet. Dabei ist der Aufhängungspunkt 5 eine Distanz r in der eingezeichneten Richtung, der Aufhängungspunkt 5' eine Entfernung r' in der eingezeichneten Richtung und der Aufhängungspunkt 5'' eine Distanz r'' in der eingezeichneten Richtung vom Massenschwerpunkt 20 des Objekts 2 entfernt.

Das erfindungsgemäße Verfahren kann auch mit mehr als drei oder nur zwei Aufhängevorrichtungen durchgeführt werden. Das Vorhandensein von mehr als drei Aufhängevorrichtungen bietet sich insbesondere bei sehr schweren oder sehr großen Objekten 2 an, da dadurch die auf die einzelnen Aufhängevorrichtungen wirkenden Kräfte im Rahmen der Nutzlast der einzelnen Aufhängevorrichtung gehalten werden können. Des Weiteren können die Seile auch einen, vom senkrechten Lot gemessenen, Winkel α aufweisen. Dafür kann im Verfahren eine Schrägzugkompensation vorgenommen werden, die in den Ansprüchen beschrieben ist. Im Alltag wird jedoch zumeist versucht werden, dass der Winkel α < 10°, vorzugsweise < 5° ist. Durch eine kleine Winkelabweichung α lässt sich die maximale Nutzlast der Aufhängevorrichtungen besser ausnutzen.

An den Aufhängevorrichtungen 3, 3', 3'' sind Vorrichtungen zur Messung der auf die Aufhängevorrichtung wirkenden Kräfte vorhanden. Diese messen die Kraft, welche aufgrund des Objektes 2 auf die Aufhängungspunkte 5, 5' und 5'' wirkt. Dabei können verschiedene Sensoren zum Einsatz kommen. So kann zum Beispiel mit Hilfe von Sensoren die Zugspannung gemessen werden. Es bietet sich aber insbesondere bei großen Objekten an, Lastschäkel und an den Lastschäkeln befestigte oder in den Lastschäkeln integrierte Kraftmessungssensoren zu verwenden.

Mit Hilfe einer kardanischen Aufhängung des Objekts, welches vorzugsweise an den Aufhängungspunkten 5, 5' und 5'' angebracht wird, wird eine Verdrillung der Seilelemente 4, 4', 4'' vermieden und die Messgenauigkeit des Verfahrens erhöht, da - bei entsprechender Sensorik - die Lage beispielsweise der Stahlseile im Raum mit einer Neigungssensorik mit Hilfe von Neigungssensoren bestimmt werden kann. Mit Hilfe einer kardanischen Aufhängung werden die Sensoren starr mit einem Ende des Kardangelenks auf der Seilseite verbunden. Dadurch sind nur zwei Orientierungsänderungen der Sensoren möglich, welche mit Hilfe von Neigungssensoren bestimmt werden können. Mit Hilfe der kardanischen Aufhängung können die auf die Aufhängungspunkte wirkenden Kräfte in drei kartesische Koordinaten zerlegt werden. Alternativ können auch die Drehwinkel der Kardangelenke bestimmt werden. Abhängig von der Schrägstellung der Stahlseile kann jedoch, insbesondere bei der Messung von großen Objekten, mit Hilfe von Hebevorrichtungen mit langen Seilelementen 4, 4' und 4'' unter kleinen Winkeln a auf eine kardanische Aufhängung verzichtet werden, ohne die Messgenauigkeit wesentlich zu verschlechtern.

Im Folgenden wird zwischen einem objektintrinsischen Koordinatensystem (x₀, y₀, z₀) und einem festen Raumkoordinatensystem (x, y, z) unterschieden. Beide Koordinatensysteme sollen kartesisch sein, obgleich auch andere Koordinatensysteme verwendet werden können. Das Raumkoordinatensystem besitzt eine vertikale Achse und kann mittels zweier Drehungen in das objektintrinsische Koordinatensystem transformiert werden. Das Raumkoordinatensystem dient bei jeder einzelnen Messung als Hilfssystem. So werden insbesondere die Flächenschwerpunkte bzw. Kraftwirkungslinien vom Raumkoordinatensystem in das objektintrinsische Koordinatensystem transformiert.

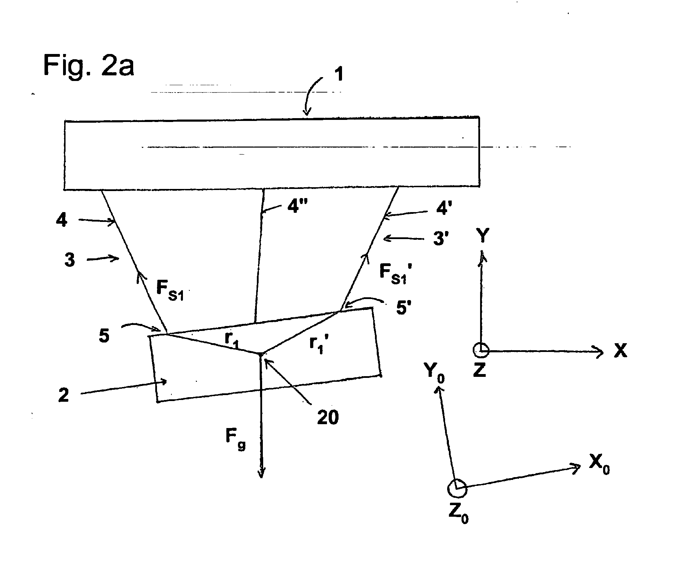

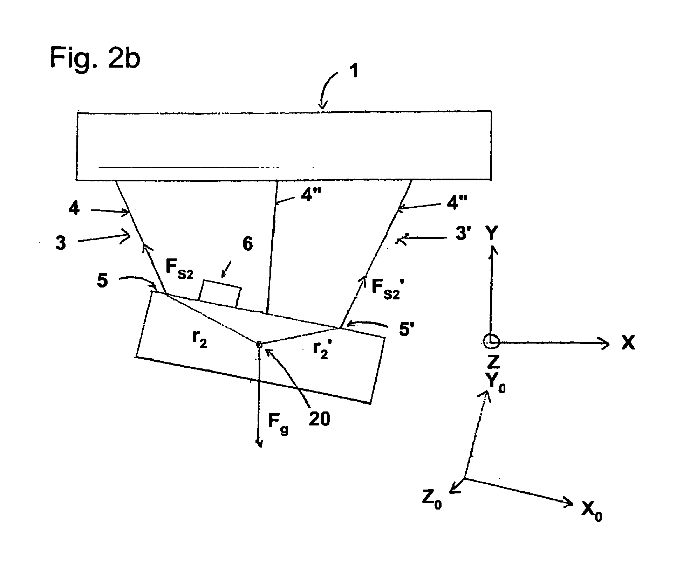

In Figur 2a wird das aufgehängte Objekt 2 in der xy-Ebene in einer ersten Position bzw. einer ersten räumlichen Lage gezeigt. An den Aufhängevorrichtungen 3, 3' bzw. 3'' wirkt dabei eine Kraft F_{S1}, F_{S1}' bzw. Fₛₗ" in Seilrichtung, welche die Gewichtskraft F_{G} des Objekts 2 kompensiert. Die Summe der physikalischen Momente bzgl. des Massenschwerpunkts, welche sich aus dem Abstand r₁ r₁' bzw. r'' und der Kraft F_{S1}, F_{S1}' bzw. F_{S1}" ergeben, ist in der Summe 0, wenn sich das Objekt in Ruhe befindet. Über die Berechnung der physikalischen Momente und die auf die Seile wirkenden Kräfte kann die Position des Massenschwerpunktes 20 des Objekts 2 in der xz-Ebene des Raumkoordinatensystems bestimmt werden. Die Position des Massenschwerpunktes 20 besitzt folglich noch einen Freiheitsgrad in der y-Richtung des Raumkoordinatensystems. Insofern ist der Flächenschwerpunkt des Objekts in den objekteigenen Koordinaten der xz-Ebene des Raumes bestimmt. Es ist zu beachten, dass die xz-Ebene des Raumes nicht zwingend mit der x₀z₀-Ebene des objekteigenen Koordinatensystems übereinstimmt. In den Figuren 2a und b befindet sich die Schwerelinie, welche entlang der y-Achse des Raumes verläuft nicht entlang der y₀-Achse des Objektes.

Um den Massenschwerpunkt 20 des Objektes 2 abschlie-βend zu bestimmen, muss mindestens ein zweiter Flächenschwerpunkt des Objektes 2, welcher nicht mit dem ersten Flächenschwerpunkt übereinstimmt, gemessen werden, d.h. die mindestens zwei Flächenschwerpunkte haben im objekteigenen Koordinatensystem unterschiedliche Kraftwirkungslinien. Von daher wird das Objekt 2 im Raum durch eine Veränderung der Längen der Seilelemente 4, 4' und 4'' in eine zweite, von der ersten unterschiedlichen, räumliche Lage gebracht. Durch die Veränderung der Längen der Seilelemente zueinander, verändern sich die aus den Aufhängungskräften resultierenden Momente und die objekteigene Ebene des zweiten Flächenschwerpunktes stimmt nicht länger mit der Ebene des ersten Flächenschwerpunktes überein. Möglicherweise kann bei kleineren Objekten eine Veränderung der Momente, welche auf das Objekt 2 wirken, auch dadurch erreicht werden, indem die Hebevorrichtung an sich geneigt wird, so dass sich die Drehmomente verändern, wenn eine Seillängenveränderung des Objektes nicht möglich ist.

In Figur 2 b befindet sich das Objekt 2 in einer zweiten räumlichen Lage, was durch die unterschiedliche Lage des objekteigenen Koordinatensystems x₀, y₀, z₀ zum Koordinatensystem x, y, z des Raumes gekennzeichnet ist. In der zweiten Position wirken andere Kräfte und andere Momente auf die Seilelemente 4, 4' und 4''. Aus den physikalischen Momenten kann wiederum der Flächenschwerpunkt in den körpereigenen Koordinaten der zweiten Position der räumlichen xz-Ebene errechnet werden.

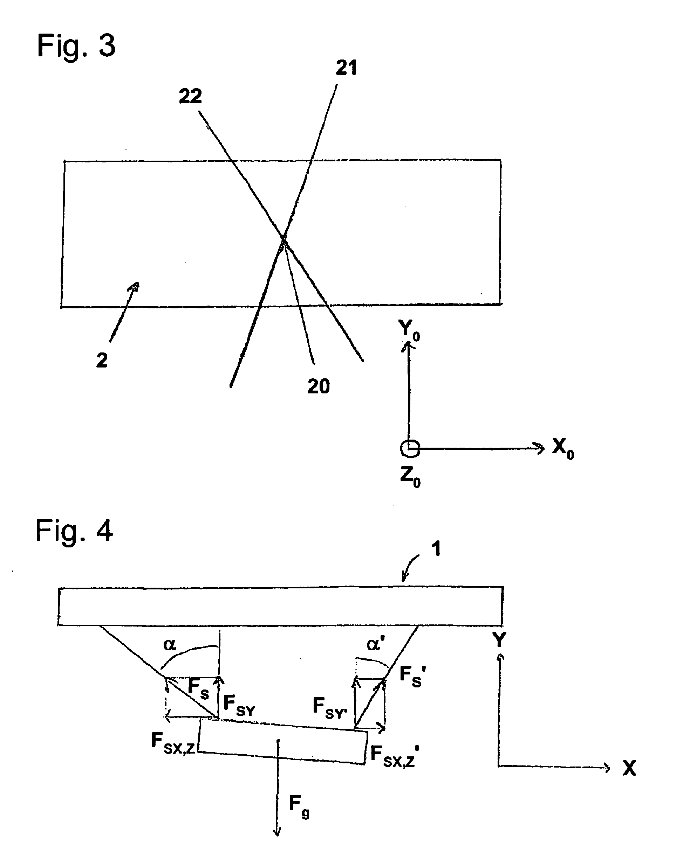

In Figur 3 ist das Objekt 2 mit der Schwerelinie 21 der ersten Position und der Schwerelinie 22 der zweiten Position im körpereigenen Koordinatensystem x₀, y₀, z₀ eingezeichnet. Bei der Überlagerung der zwei Schwerelinien ergibt sich ein Schnittpunkt, welcher den Massenschwerpunkt 20 eindeutig bestimmt. Da es aufgrund von Messfehlern sein kann, dass sich die zwei Schwerelinien 21 und 22 nicht schneiden, kann der Massenschwerpunkt durch verschiedene Verfahren interpoliert werden. So kann beispielsweise der kürzeste Abstand zwischen den beiden Schwerelinien bestimmt werden und der Massenschwerpunkt 20 als in der Mitte des Abstands der beiden Schwerelinien angenommen werden. Zur Bestimmung des Massenschwerpunktes sind mathematisch betrachtet keine weiteren Messungen notwendig. Die Qualität der Messung kann sich jedoch, insbesondere bei sich nicht schneidenden Schwerelinien 21 und 22, durch die Messung von weiteren räumlichen Lagen bzw. Positionen verbessern. Des Weiteren ermöglichen weitere Messungen die Kalibrierung des Messsystems und die Ermittlung weiterer Parameter. Während die Basiskalibrierung des Systems entweder extern oder durch Taramessung erfolgt, so dass beispielsweise ein Null-Offset der Sensoren bekannt ist, können messungsspezifische Parameter wie die geometrische Anbringung der Aufhängungspunkte oder der Neigungssensoren am Objekt teilweise aus den Messdaten identifiziert werden. Bei Kenntnis der Parameter wie der Seillängen und der Sensorik und bei geeigneter Abtastfrequenz kann bei einer Schwingung des Objekts auch der Trägheitstensor bestimmt werden.

Um die Orientierung des Objektes 2 im Raum zu bestimmen, d.h. die Transformationen des Raumkoordinatensystems zum körpereigenen Koordinatensystem vorzunehmen, kann im einfachsten Fall das Verhältnis der Seillängen zueinander herbeigezogen werden. Zweckmäßiger ist jedoch das Anbringen eines oder mehrerer Neigungssensoren 6 bzw. 6' auf dem Objekt, wobei die Neigung gegenüber eines vorher bestimmten Referenzkoordinatensystems bestimmt wird. Dabei bietet es sich an als Referenzsystem das Raumkoordinatensystem zu verwenden.

In den Figuren 2a und 2b wird die Bestimmung des Massenschwerpunktes mit drei Aufhängevorrichtungen vorgenommen. Mit zwei Aufhängevorrichtungen lässt sich das Verfahren analog dazu durchführen. Dabei ist zu beachten, dass bei der Aufhängung an zwei Aufhängungspunkten der Massenschwerpunkt des Objekts in der Ebene liegt, welche durch die Verbindungsgerade der beiden Aufhängungspunkte und dem senkrechten Lot dazu gegeben ist. Durch die Messung von mindestens zwei verschiedenen räumlichen Lagen wird der Massenschwerpunkt in allen drei Dimensionen bestimmt. Allerdings erweist sich, insbesondere bei der Messung von Großstrukturen, wie beispielsweise Schiffen oder Schiffsbaugruppen, eine Aufhängung an mindestens drei Aufhängungspunkten oftmals als praktikabler.

Anhand vom Figur 4 sollen die unterschiedlichen Möglichkeiten der Massenschwerpunktbestimmung ohne und mit Schrägzugkompensation der Aufhängevorrichtung 3, 3', 3'' beschrieben werden. Wie bereits vorab erwähnt, ist zur Bestimmung des Massenschwerpunktes eine Bestimmung der auf die Seile wirkenden Kräfte und der daraus resultierenden Momente bzgl. des Massenschwerpunkts notwendig. Hierzu sind prinzipiell drei Methoden möglich. Um das Prinzip zu erläutern, wird eine zweidimensionale Darstellung in der xy-Raumebene gewählt. Die Bestimmung in drei Dimensionen ist analog dazu.

In einer einfachen Ausführung des Verfahrens wird die Gewichtskraft F_{G} des Objekts 2 durch die auf die Seile wirkenden Kräfte F_{S} und F_{S}' bestimmt. Dabei wird die Annahme getroffen, dass der Betrag der Kraftvektoren F_{S} und F_{S}' im Wesentlichen gleich dem Betrag der Gewichtskraft F_{G} ist. Dieses Verfahren eignet sich bei geringen Winkeln α zwischen Seil und Erdlotrechter, wie es beispielsweise bei langen Seilen üblicherweise der Fall ist. Es hat insbesondere den Vorteil, dass auf weitere Neigungssensoren auf den Aufhängevorrichtungen 4, 4' und 4'' verzichtet werden kann.

In einer zweiten Ausführungsform des Verfahrens wird eine erste Schrägzugkompensation eingeführt. Dazu wird der Kraftvektor Fₛ, welcher auf das Seil 4 wirkt in eine Komponente entlang der y-Richtung F_{Sy} und einer dazu senkrecht wirkenden Komponente F_{Sx,z} zerlegt. Die Gewichtskraft des Objekts F_{G} bestimmt sich nun aus den Beträgen der Kraftkomponenten F_{Sy} und F_{Sy}'. Allerdings lässt sich auf diese Weise noch nicht genau aufschlüsseln, in welche Richtung die horizontalen Kraftkomponenten F_{Sx,z} und F_{Sx,z}' wirken. Jedoch ist die erste Näherung durch die Zerlegung der Kräfte in ihre vertikalen und horizontalen Komponenten bereits sehr effektiv. Um die Kraftvektoren F_{S} und F_{S'} in ihre Komponenten zu zerlegen, sind Neigungssensoren oder eine manuelle Bestimmung des Winkel α von Nöten. Neigungssensoren können den Winkel α dabei automatisch bestimmen.

In einer besonders genauen Ausführung des Messverfahren werden weitere Messsensoren an den Aufhängevorrichtungen 4, 4' und 4'' angebracht. Dabei wird die absolute Orientierung des Seils im Raum gemessen, so dass der Kraftvektor F_{S} in seine drei kartesischen Koordinaten zerlegt werden kann, so dass getrennte Koordinaten F_{Sx}, F_{Sy} und F_{Sz} verfügbar sind. Unter Kenntnis aller Kraftkomponenten lässt sich eine besonders genaue Bestimmung des Massenschwerpunkts 20 vornehmen. Für diese Form des Messverfahrens ist es insbesondere vorteilhaft, wenn eine kardanische Aufhängung zur absoluten Neigungsbestimmung der Aufhängevorrichtung eingesetzt wird.

Im Rahmen von theoretischen Untersuchungen der verschiedenen Verfahren wurde festgestellt, dass die Messgenauigkeit der Massenschwerpunktbestimmung bei allen drei Verfahren, d. h. ohne und mit Schrägzugkompensation eine Bestimmung des Massenschwerpunktes mit einem maximalen Fehler von 2% in Bezug auf die Ausmaße des Objekts durchgeführt werden kann. Unter Verwendung einer kardanischen Aufhängung unter Bestimmung der kartesischen Koordinaten des Kraftvektors kann dieser Prozentsatz sogar auf unter 0,5% verringert werden.

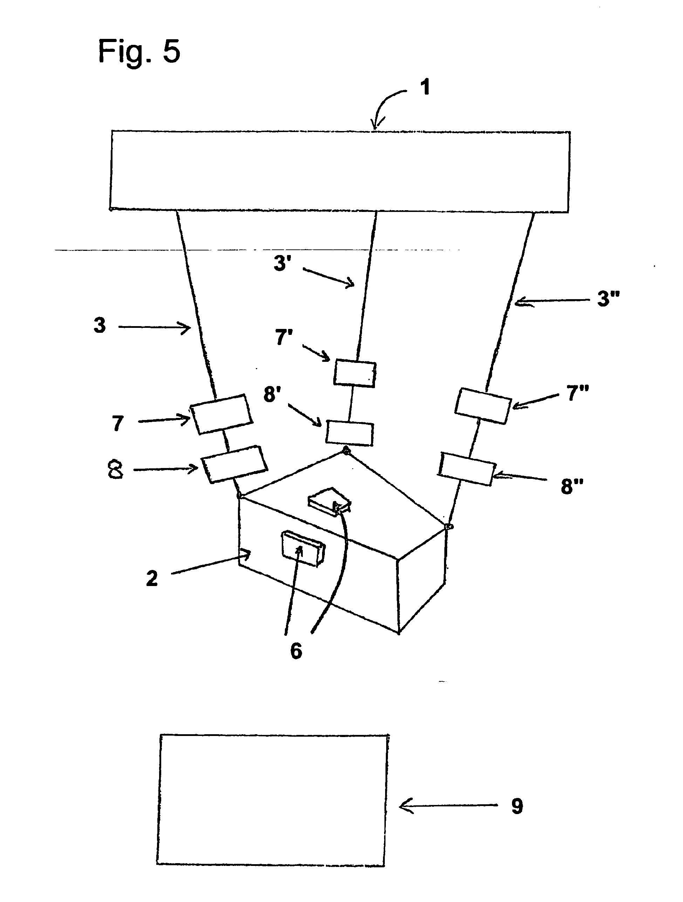

In Figur 5 ist eine Hebevorrichtung 1 mit Aufhängevorrichtungen 3, 3' und 3'' zu sehen, an welcher ein Objekt 2 mit einem am Objekt aufgebrachten Neigungssensor 6 und an den Seilen befestigten Kraftsensoren 7 und Neigungssensoren 8 zu sehen ist. Des Weiteren ist eine Datenauswerteeinheit 9 vorhanden, in welcher die Messungen der verschiedenen Sensoren 6, 7, 8 zusammengeführt werden, die Flächenschwerpunkte und letztendlich der Massenschwerpunkt des Objekts 2 berechnet werden. Die Messergebnisse der einzelnen Sensoren werden kabellos per Funk an die Datenauswerteeinheit übertragen. Dies bietet sich insbesondere bei sehr großen Objekten, wie sie beispielsweise auf Werften gemessen werden, an. Mit Hilfe einer Datenauswerteeinheit können gleichzeitig das Eigengewicht der Aufhängevorrichtungen, welche die Messergebnisse an den Kraftsensoren 7 und den Neigungssensoren 8 verfälschen, mit berücksichtigt werden, beispielsweise im Rahmen einer Taramessung, und somit eine genauere Bestimmung des Massenschwerpunkts 20 ermöglichen.

Die erfindungsgemäßen Verfahren sind im Wesentlichen mit verfügbaren Kränen durchführbar. Voraussetzung dafür sind, dass der Kran bzw. mehrere Kräne über mindestens zwei Aufhängevorrichtungen verfügt und Kraftmessungssensoren bzw. Neigungsmessungssensoren am Objekt und an den Aufhängevorrichtungen 3, 3', 3'' befestigt werden. Mit Hilfe einer Datenauswerteeinheit 9, welche die Messdaten der Neigungssensoren 6 und der Kraftsensoren 7, vorzugsweise kabellos per Funk, empfängt, kann die Massenschwerpunktbestimmung eines sehr großen bzw. sehr schweren Objekts im Vergleich zu bisherigen Verfahren innerhalb sehr kurzer Zeit durchgeführt werden.

Das Messverfahren eignet sich insbesondere für die Messung von maritimen Objekten. Zwar ist es mit dem Verfahren in vielen Fällen schwierig, das Gewicht und den Massenschwerpunkt kompletter Seeschiffe oder anderer maritimer Großobjekte als Ganzes experimentell zu bestimmen, da diese für gängige Krananlagen zu schwer bzw. zu groß sind. Das Verfahren ist jedoch praktikabel für Messungen von einzelnen Baugruppen von Seeschiffen, wobei die Baugruppen je nach Werft ein Gewicht von bis zu 1000 Tonnen aufweisen können. Eine abschließende Gewichts- und Massenschwerpunktbestimmung des fertigen Schiffs erfolgt dann über den Krängungsversuch, welcher seit Beginn des industriellen Schiffbaus nahezu unverändert praktiziert wird. Die fertigungsbegleitende Gewichts- und Massenschwerpunktskontrolle einzelner Baugruppen mit Hilfe des entwickelten Verfahrens bietet dabei eine gute Möglichkeit vor dem Zusammenbau kompletter Schiffseinheiten die geplanten und die gemessenen Daten der Gewichte und Massenschwerpunkte miteinander zu vergleichen und somit Fehler bereits bei einzelnen Baugruppen oder durch Veränderung noch zu fertigender Teile mit welchen die Baugruppe im Betrieb in Verbindung steht auszugleichen und so die vertraglich zugesicherten Betriebseigenschaften von Schiffen einzuhalten.

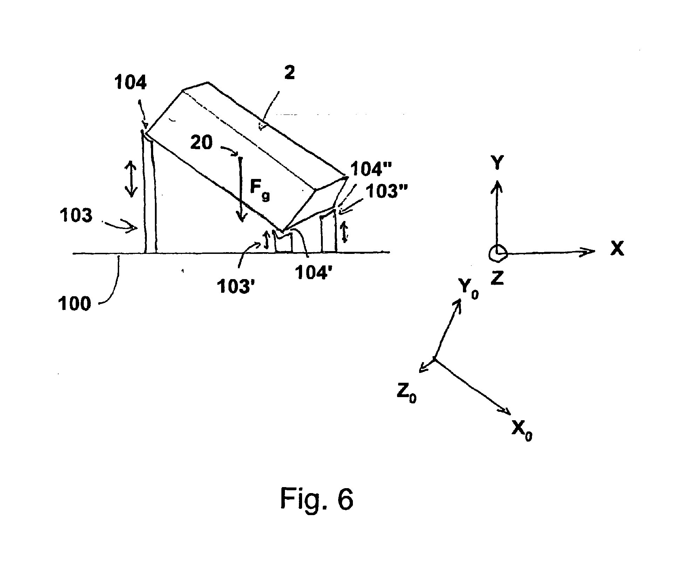

In der Fig. 6 wird eine alternative Ausführungsform zur Messung des Massenschwerpunkts dargestellt. Hierbei ist das Objekt 2 nicht an Seilelementen aufgehängt, sondern lediglich auf drei höhenverstellbare Pallungen 103, 103', 103" aufgelegt. Die Auflagenflächen 104, 104', 104" sind so profiliert, dass das Objekt 2 an seinen Aussenkanten rutschfest aufgelegt werden kann. Um die verschiedenen räumlichen Lagen herbeizuführen, werden die Pallungen 103, 103', 103'' in ihrer Höhe verändert, so dass unterschiedliche Kräfte auf die einzelnen Pallungen 103, 103', 103'' wirken. Die Kräfte werden über an den Pallungen angeordneten Kraftsensoren gemessen. Die Höhe einer Pallung wird gegenüber dem Horizont 100 gemessen, welcher eine im Wesentlichen in der x-Richtung verlaufende Linie ist. Der Horizont kann z.B. durch den Boden gegeben sein. Die Neigung des Objekts 2 wird mittels am Objekt befestigten Neigungssensoren ermittelt.

Bei geeigneter Verbindung zwischen einer Pallung und einer Kante des Objekts 2 kann auch eine Komponentendarstellung der Kräfte zumindest in der horizontalen x-Richtung und in der vertikalen y-Richtung ermittelt werden. Eine Schrägdruckkompensation analog zur Schrägzugkompensation wie bei der Aufhängung an Seilelementen ist mit der in der Fig. 6 dargestellten Hebevorrichtung beispielsweise bei schrägem Untergrund oder schräg aufgestellten Pallungen möglich.

## Patentansprüche

1. Verfahren zur Bestimmung eines räumlichen Massenschwerpunkts und einer Masse eines Objekts mittels einer Hebevorrichtung, wobei die Hebevorrichtung mindestens zwei unterschiedliche Aufhängevorrichtungen aufweist, wobei die Aufhängevorrichtungen jeweils ein Seilelement und einen Aufhängungspunkt zum Verbinden mit dem Objekt und Neigungssensoren zur Bestimmung der Schrägstellung der Aufhängevorrichtungen (3, 3', 3'') aufweisen, welches folgende Schritte umfasst:
a) Aufhängen des Objekts (2) an mindestens zwei unterschiedlichen Objektpunkten, welche mit mindestens zwei Aufhängungspunkten (5, 5', 5'') der Hebevorrichtung (1) verbunden werden, wobei das Objekt (2) an den Aufhängevorrichtungen (3, 3', 3'') kardanisch aufgehängt wird;
b) Orientierung des Objekts (2) in mindestens zwei unterschiedlichen räumlichen Lagen;
c) Messung der Orientierung des Objekts (2) je räumlicher Lage, wobei die Orientierung des Objekts (2) durch mindestens einen am Objekt befestigten Neigungssensor (6) gemessen wird;
d) Messung der aufgrund des aufgehängten Objekts (2) auf die Aufhängevorrichtungen (3,3',3'') wirkenden Kräfte je räumlicher Lage, wobei die auf die Aufhängevorrichtungen (3,3',3'') wirkenden Kräfte zur Auswertung jeweils in drei unabhängige Kraftkomponenten zerlegt werden;
e) Ermittlung der Flächenschwerpunkte des Objekts und der dazugehörigen Kraftwirkungslinien (2) je räumlicher Lage, wobei der Flächenschwerpunkt der jeweiligen räumlichen Lage unter Zuhilfenahme einer Schrägzugkompensation der Aufhängevorrichtungen (3,3',3") ermittelt wird;
f) Ermittlung des räumlichen Massenschwerpunkts (20) durch Überlagerung von mindestens zwei Kraftwirkungslinien.

2. Verfahren nach Anspruch 1, **dadurch gekennzeichnet, dass** zusätzlich eine Datenauswerteinheit (9) vorhanden ist, welche die Messungen stochastisch auswertet und die Flächenschwerpunkte und den Massenschwerpunkt (20) ermittelt.

3. Verfahren nach Anspruch 2, **dadurch gekennzeichnet, dass** die Messungen kabellos an die Datenauswerteeinheit (9) übermittelt werden.

4. Verfahren nach Anspruch 2 oder 3, **dadurch gekennzeichnet, dass** die Messwerte per Funk an die Datenauswerteeinheit (9) übermittelt werden.

5. Verfahren nach einem der vorhergehenden Ansprüche, **dadurch gekennzeichnet, dass** an den Aufhängevorrichtungen (3,3',3'') oder den Tragevorrichtungen jeweils mindestens ein Kraftsensor (7,7',7") auf der jeweiligen Aufhängevorrichtung (3,3',3'') angeordnet ist.

6. Verfahren nach einem der vorhergehenden Ansprüche, **dadurch gekennzeichnet, dass** die auf die Aufhängevorrichtungen (3,3',3'') wirkenden Kräfte durch Lastschäkel mit integrierten Kraftsensoren (7,7',7'') gemessen werden.

7. Verfahren nach einem der vorhergehenden Ansprüche, **dadurch gekennzeichnet, dass** die Hebevorrichtung (1) mindestens einen Kran oder eine Krananlage mit insgesamt mindestens zwei Aufhängevorrichtungen (3,3',3'') aufweist.

8. Verfahren nach einem der vorhergehenden Ansprüche, **dadurch gekennzeichnet, dass** bei der Messung der Masse des Objekts (2) durch eine vorherige Taramessung zumindest teilweise eine Eigenmasse von Teilen der Hebevorrichtung (1) bekannt ist.

9. Verfahren nach einem der vorhergehenden Ansprüche, **dadurch gekennzeichnet, dass** mindestens drei Aufhängevorrichtungen vorhanden sind.

10. Verfahren nach einem der vorhergehenden Ansprüche, **dadurch gekennzeichnet, dass** das Objekt eine Schiffsbaugruppe ist und der gemessene Massenschwerpunkt mit einem geplanten Massenschwerpunkt verglichen wird und somit Fehler bei der Schiffsbaugruppe durch eine Veränderung noch zu fertigender Teile mit welchen die Baugruppe im Betrieb in Verbindung steht ausgeglichen werden.

11. Hebevorrichtung mit mindestens zwei unterschiedlichen Aufhängevorrichtungen (3,3',3"), welche jeweils ein Seilelement (4,4',4'') und einen Aufhängungspunkt (5,5',5'') aufweisen, wobei die Aufhängevorrichtungen (3,3',3") über die Seilelemente (4,4',4") mit der Hebevorrichtung (1) verbunden sind und die Seilelemente (4,4',4'') jeweils getrennt ansteuerbar sind und freihängend sind, wobei
die Seilelemente (4,4',4") jeweils eine freihängende Länge aufweisen und die freihängenden Längen für die unterschiedlichen Seilelemente variierbar sind und
eine Datenauswerteeinheit (9) vorhanden ist, welche mit Sensoren (6,7,8) verbunden ist, welche eine räumliche Lage und/oder Orientierung eines aufgehängten Objekts bestimmen und die Aufhängevorrichtungen (3,3',3") der Hebevorrichtung (1) Kraftsensoren (7,7',7'') zur Bestimmung der Seilkraft aufweisen,
**dadurch gekennzeichnet, dass**
eine kardanische Aufhängung an den Aufhängevorrichtungen (3,3',3'') vorhanden ist und die Aufhängevorrichtungen Neigungssensoren (8,8',8'') zur Bestimmung der Seilneigung aufweisen und die Datenauswerteeinheit (9) mit mindestens einem weiteren Neigungssensor (6) verbunden ist, wobei der Neigungssensor (6) an einem an der Hebevorrichtung (1) aufzuhängendem Objekt (2) befestig bar ist.

12. Hebevorrichtung nach Anspruch 11, **dadurch gekennzeichnet, dass** mindestens ein Sensor per Funk mit der Datenauswerteeinheit (9) kommuniziert.

## Claims

1. A method for determining a spatial centre of mass and a mass of an object by means of a lifting device, the lifting device having at least two different suspension devices, the suspension devices in each case having a cable element and a suspension point for connecting to the object and inclination sensors for determining the inclined position of the suspension devices (3, 3', 3 "), which method comprises the following steps:
a) suspension of the object (2) at at least two different object points which are connected to at least two suspension points (5, 5', 5") of the lifting device (1), the object (2) being suspended cardanically on the suspension devices (3, 3', 3");
b) orientation of the object (2) in at least two different spatial positions;
c) measurement of the orientation of the object (2) per spatial position, the orientation of the object (2) being measured by at least one inclination sensor (6) fastened to the object;
d) measurement of the forces acting on the suspension devices (3, 3', 3 ") due to the suspended object (2) per spatial position, the forces acting on the suspension devices (3, 3', 3 ") for evaluation being broken down in each case into three independent force components;
e) determination of the centres of area of the object and the associated force action lines (2) per spatial position, the centre of area of the respective spatial position being determined with the aid of a diagonal-pull compensation of the suspension devices (3, 3', 3 ");
f) determination of the spatial centre of mass (20) by superposing at least two force action lines.

2. A method according to Claim 1, **characterised in that** additionally a data evaluation unit (9) is present which evaluates the measurements stochastically and determines the centres of area and the centre of mass (20).

3. A method according to Claim 2, **characterised in that** the measurements are transmitted wirelessly to the data evaluation unit (9).

4. A method according to Claim 2 or 3, **characterised in that** the measured values are transmitted to the data evaluation unit (9) by radio.

5. A method according to one of the preceding claims, **characterised in that** on the suspension devices (3, 3', 3 ") or the supporting devices in each case at least one force sensor (7, 7', 7") is arranged on the respective suspension device (3, 3', 3").

6. A method according to one of the preceding claims, **characterised in that** the forces acting on the suspension devices (3, 3', 3 ") are measured by load shackles with integrated force sensors (7, 7', 7").

7. A method according to one of the preceding claims, **characterised in that** the lifting device (1) has at least one crane or a crane system with a total of at least two suspension devices (3, 3', 3").

8. A method according to one of the preceding claims, **characterised in that** when measuring the mass of the object (2) a dead weight of parts of the lifting device (1) is known at least partially by a preceding tare measurement.

9. A method according to one of the preceding claims, **characterised in that** at least three suspension devices are present.

10. A method according to one of the preceding claims, **characterised in that** the object is a ship's structural unit and the measured centre of mass is compared with a planned centre of mass and thus errors in the ship's structural unit are compensated by changing parts which are still to be manufactured to which the structural unit is connected during operation.

11. A lifting device with at least two different suspension devices (3, 3', 3"), which have in each case a cable element (4, 4', 4") and a suspension point (5, 5', 5"), the suspension devices (3, 3', 3") being connected to the lifting device (1) via the cable elements (4, 4', 4") and the cable elements (4, 4', 4") being able in each case to be actuated separately and being free-hanging,
the cable elements (4, 4', 4") in each case having a free-hanging length and the free-hanging lengths being variable for the different cable elements, and
a data evaluation unit (9) being present which is connected to sensors (6, 7, 8) which determine a spatial position and/or orientation of a suspended object, and the suspension devices (3, 3', 3") of the lifting device (1) having force sensors (7, 7', 7") for determining the cable force,
**characterised in that**
a cardanic suspension is present on the suspension devices (3, 3', 3 ") and the suspension devices have inclination sensors (8, 8', 8") for determining the cable inclination, and the data evaluation unit (9) is connected to at least one further inclination sensor (6), the inclination sensor (6) being able to be fastened to an object (2) which is to be suspended from the lifting device (1).

12. A lifting device according to Claim 11, **characterised in that** at least one sensor communicates with the data evaluation unit (9) by radio.

## Revendications

1. Procédé pour la détermination d'un centre de gravité massique dans l'espace et d'une masse d'un objet au moyen d'un dispositif de levage, dans lequel le dispositif de levage présente au moins deux dispositifs de suspension différents, dans lequel les dispositifs de suspension présentent chacun un élément de câble et un point de suspension pour l'assemblage avec l'objet, et des capteurs d'inclinaison pour déterminer l'obliquité des dispositifs de suspension (3, 3', 3 "), lequel procédé comporte les étapes suivantes :
a) suspension de l'objet (2) au niveau d'au moins deux points différents de l'objet, lesquels sont reliés à au moins deux points de suspension (5, 5', 5") du dispositif de levage (1), l'objet (2) étant suspendu à Cardan aux dispositifs de suspension (3, 3', 3") ;
b) orientation de l'objet (2) dans au moins deux positions dans l'espace différentes ;
c) mesure de l'orientation de l'objet (2) pour chaque position dans l'espace, l'orientation de l'objet (2) étant mesurée par au moins un capteur d'inclinaison (6) fixé sur l'objet ;
d) dans chaque position dans l'espace, mesure des forces agissant sur les dispositifs de suspension (3, 3', 3") du fait de l'objet (2) suspendu, lesquelles forces agissant sur les dispositifs de suspension (3, 3', 3") étant décomposées pour une analyse respective dans trois composantes de force indépendantes ;
e) détermination des centres de gravité de la surface de l'objet et des lignes d'effet dynamique qui lui sont associées (2) pour chaque position dans l'espace, le centre de gravité de la surface de la position dans l'espace respective étant déterminé à l'aide d'une compensation de traction en diagonale des dispositifs de suspension (3, 3', 3") ;
f) détermination du centre de gravité massique (20) dans l'espace par la superposition d'au moins deux lignes d'effet dynamique.

2. Procédé selon la revendication 1, **caractérisé en ce qu'**il est prévu, en plus, une unité d'analyse des données (9), qui effectue une analyse stochastique des mesures et détermine les centres de gravité des surfaces et le centre de gravité massique (20).

3. Procédé selon la revendication 2, **caractérisé en ce que** les mesures sont transmises sans fil vers l'unité d'analyse des données (9).

4. Procédé selon la revendication 2 ou 3, **caractérisé en ce que** les valeurs de mesure sont transmises par radio vers l'unité d'analyse des données (9).

5. Procédé selon l'une quelconque des revendications précédentes, **caractérisé en ce que** sur les dispositifs de suspension (3, 3', 3") ou les dispositifs de portage, respectivement au moins un capteur de force (7, 7', 7") est agencé sur le dispositif de suspension (3, 3', 3") respectif.

6. Procédé selon l'une quelconque des revendications précédentes, **caractérisé en ce que** les forces agissant sur les dispositifs de suspension (3, 3', 3") sont mesurées au moyen de manilles de charge avec des capteurs de force (7, 7', 7") intégrés.

7. Procédé selon l'une quelconque des revendications précédentes, **caractérisé en ce que** le dispositif de levage (1) présente au moins une grue ou une installation de grutage avec au total au moins deux dispositifs de suspension (3, 3', 3 ").

8. Procédé selon l'une quelconque des revendications précédentes, **caractérisé en ce que** lors de la mesure de la masse de l'objet (2) au moyen d'une mesure de la tare préalable, on connaît au moins en partie une masse propre de parties du dispositif de levage (1).

9. Procédé selon l'une quelconque des revendications précédentes, **caractérisé en ce qu'**il est prévu au moins trois dispositifs de suspension.

10. Procédé selon l'une quelconque des revendications précédentes, **caractérisé en ce que** l'objet est un module de construction pour navire et le centre de gravité massique mesuré est comparé à un centre de gravité massique prévu et ainsi, les défauts sur le module de construction pour navire peuvent être corrigés par une modification des parties restant à fabriquer, avec lesquelles le module est en relation lorsqu'il est en service.

11. Dispositif de levage avec au moins deux dispositifs de suspension (3, 3', 3 ") différents, qui présentent respectivement un élément de câble (4, 4', 4") et un point de suspension (5, 5', 5"), les dispositifs de suspension (3, 3', 3") étant reliés au dispositif de levage (1) via les éléments de câble (4, 4', 4"), et les éléments de câble (4, 4', 4") étant respectivement manoeuvrables séparément et étant à suspension libre, dans lequel
Les éléments de câble (4, 4', 4") présentent respectivement une longueur de suspension libre et les longueurs de suspension libre peuvent être variées pour les différents éléments de câble, et
il est prévu une unité d'analyse des données (9) qui est reliée à des capteurs (6, 7, 8), qui déterminent une position dans l'espace et/ou une orientation d'un objet suspendu, et les dispositifs de suspension (3, 3', 3") du dispositif de levage (1) présentent des capteurs de force (7, 7', 7") pour déterminer la force du câble,
**caractérisé en ce qu'**il est prévu une suspension à Cardan sur les dispositifs de suspension (3, 3', 3"), et les dispositifs de suspension présentent des capteurs d'inclinaison (8, 8', 8") pour déterminer l'inclinaison du câble, et l'unité d'analyse des données (9) est reliée à au moins un autre capteur d'inclinaison (6), le capteur d'inclinaison (6) pouvant être fixé à un objet (2) à suspendre au dispositif de levage (1).

12. Dispositif de levage selon la revendication 11, **caractérisé en ce qu'**au moins un capteur communique par radio avec l'unité d'analyse des données (9).
